# EUROPÄISCHE PATENTSCHRIFT

(11) **EP 4 196 315 B1**
(45) Veröffentlichungstag und Bekanntmachung des Hinweises auf die Patenterteilung: **29.01.2025**
(21) Anmeldenummer: 21759063.7
(22) Anmeldetag: 10.08.2021
(51) Int. Cl.: B23K 26/21, B23K 103/10

(54) **SCHWEISSVERFAHREN**
WELDING METHOD
PROCÉDÉ DE SOUDAGE

(30) Priorität: 11.08.2020 DE 102020210182
(43) Veröffentlichungstag der Anmeldung: 21.06.2023
(73) Patentinhaber: Vitesco Technologies GmbH, 93055 Regensburg (DE); Continental Autonomous Mobility Germany GmbH, 85057 Ingolstadt (DE)
(72) Erfinder: BRAUN, Christian, 90411 Nürnberg (DE); GUGEL, Hajo, 81737 München (DE); SEEGER, Johannes, 90411 Nürnberg (DE)
(74) Vertreter: Schlotter, Alexander Carolus Paul
(86) Internationale Anmeldenummer: PCT/EP2021/072255
(87) Internationale Veröffentlichungsnummer: WO 2022/034064

(56) Entgegenhaltungen:
- RHEINFELDEN ALLOYS: "Primary aluminum HPDC Alloys for Structural Casts in Vehicle Construction", 31 August 2018 (2018-08-31), pages 1 - 60, XP055792919, Retrieved from the Internet <URL:https://rheinfelden-alloys.eu/wp-content/uploads/2018/09/rheinfelden_alloys_structural_casts_2018.pdf> [retrieved on 20210407]
- NUBURU H E: "The First Industrial Blue Laser is changing the game", 31 December 2019 (2019-12-31), XP055869011, Retrieved from the Internet <URL:https://www.mtb.es/files/products/NUBURU_White_Paer_Blue_Laser_April_2019_1.pdf> [retrieved on 20211203]
- MORINAGA TAKUICHI ET AL: "Influence of Iron on Die-Casting Alloys of the Al-Si-Cu System", TRANSACTIONS OF THE JAPAN INSTITUTE OF METALS., vol. 6, no. 2, 1 January 1965 (1965-01-01), JP, pages 72 - 77, XP055868887, ISSN: 0021-4434, Retrieved from the Internet <URL:https://www.jstage.jst.go.jp/article/matertrans1960/6/2/6_2_72/_pdf> [retrieved on 20211202], DOI: 10.2320/matertrans1960.6.72

## Beschreibung

Die Erfindung betrifft ein Schweißverfahren sowie die Verwendung eines blauen Dioden-Lasers zur fluiddichten Verschweißung eines Druckgussformteils aus einer Al-Mg-Fe-Legierung mit mindestens einem weiteren Metallteil.

Aluminium-Druckguss erweist sich beim Schweißen bekanntlich als problematisch, denn er lässt sich nicht hydraulisch dicht mit anderen Metallen verschweißen. Ein Aluminium-Druckguss bildet beim Schweißen ein grobporiges Schweißgefüge, so dass eine hydraulisch dichte Schweißverbindung nicht zustande kommen kann (sog. Schweißnahtporosität).

Aus Rheinfelden Alloys: "Primary aluminum HPDC Alloys for Structural Casts in Vehicle Construction" (31. August 2018, Seiten 1-60) ist ein Schweißverfahren, bei dem ein Druckgussformteil aus einer Al-Mg-Fe-Legierung mit mindestens einem weiteren Metallteil verschweißt wird, bekannt.

Der Erfindung liegt die Aufgabe zugrunde, die Schweißverbindbarkeit von Aluminium-Druckguss zu verbessern.

Diese Aufgabe wird durch ein gemäß Anspruch 1 vorgeschlagenes und unter Schutz gestelltes Schweißverfahren gelöst.

Es wird ein Schweißverfahren vorgeschlagen, bei dem ein Druckgussformteil aus einer Al-Mg-Fe-Legierung mit mindestens einem weiteren Metallteil fluiddicht verschweißt wird.

Dabei werden für die Aluminiumlegierung ein Mg-Gehalt von 4 % ≤ Mg ≤ 4,6 % und ein Fe-Gehalt von 1,31 % ≤ Fe ≤ 1,7 % verwendet sowie ein Zumischungs- bzw. Beimischungsgehalt zusätzlicher, geringfügiger Legierungsbestandteile, welcher als solcher maximal 0,2 % Si umfasst. Der besagte Fe-Gehalt umfasst dabei das Al-Mg-Fe-Eutektikum sowie eine übereutektische Zusammensetzung der zwei Legierungsbestandteile Fe und Mg.

Diese Gehaltsangaben in % verstehen sich dabei als Masse%-Angaben.

Gemäß der Erfindung wird für die Verschweißung dabei ein blauer Dioden-Laser und kein Schweißzusatzwerkstoff verwendet.

Eine Al-Mg-Fe-Legierung der vorgeschlagenen Art zeichnet sich durch ihr hervorragendes Formfüllungsvermögen und ihre ausgezeichnete Gießbarkeit aus. In Kombination mit dem vorgeschlagenen blauen Dioden-Laser ermöglicht sie zudem eine fluidisch dichte Schweißverbindbarkeit mit einem weiteren Metall, wobei die Schweißverbindbarkeit durch den sehr geringen Siliziumanteil von max. 0,2 % begünstigt wird.

Dadurch eröffnen sich neue Anwendungsmöglichkeiten für eine solche Al-Mg-Fe-Legierung, etwa in Bezug auf komplexe Gehäuse von Wasser- oder Ölpumpen, bei denen man bislang zur Erzielung einer hydraulischen Dichtheit auf Verbindungstechniken setzt, bei welchen Dichtungen, Verschraubungen und/oder Verklebungen etc. zum Einsatz kommen.

Das vorgeschlagene Schweißverfahren trägt somit zur Kosten- und Gewichtsreduktion von Druckgussformteilen bei.

Weitere Anwendungen für eine solche Al-Mg-Fe-Legierung sind z.B. Gehäuse von Motorsteuergeräten, Radarsensoren und dergleichen mehr.

Gute Schweißergebnisse werden dabei in einem blauen Wellenlängenbereich von 450 nm ± 30 nm erzielt und insbesondere bei einer Wellenlänge von 450 nm bzw. ca. 450 nm.

Die kurzen Wellenlängen des blauen Lasers (ca. 405 nm bis ca. 490 nm) begünstigen dabei eine höhere Absorption von Energie durch die vorgeschlagene Al-Mg-Fe-Legierung, so dass qualitativ hochwertigere und gleichmäßigere Schweißergebnisse bei der Laserbearbeitung erzielt werden.

So hat z.B. ein (Rein-)Aluminiumwerkstoff der Güte Al 99.5 bei Verwendung eines solch blauen Dioden-Lasers mit einer Wellenlänge von ca. 450 nm - gegenüber einem Laser mit einer Wellenlänge von ca. 1064nm (Infrarot-Strahlung) - ein um den Faktor 2 höheres Absorptionsvermögen.

Eine Al-Mg-Fe-Legierung der vorgeschlagenen Art hingegen hat bei Verwendung eines solch blauen Dioden-Lasers mit einer Wellenlänge von ca. 450 nm - gegenüber einem Laser mit einer Wellenlänge von ca. 1064nm (Infrarot-Strahlung) - sogar ein um den Faktor 2,5 höheres Absorptionsvermögen.

Beim vorgeschlagenen Schweißverfahren kann dabei als weiteres Metallteil z.B. ein Druckgussformteil der gleichen bzw. der vorgeschlagenen Art, ein Aluminiumteil bzw. Rein-Aluminiumteil (aus z.B. 99,5 Al), ein Aluminium-Knetlegierungsteil (aus z.B. einer Aluminiumknetlegierung der 5000er oder 6000er Serie, etwa aus AIMgSi1, AlMg3Mn, AIMg4,6Mn) und/oder ein Kupferwerkstoffteil verwendet werden. Derartige Metallteile ließen sich bislang mit einem Aluminium-Druckgussformteil nicht hydraulisch dicht verschweißen.

Ein Druckgussformteil, welches mit mindestens einem weiteren Metallteil verschweißt ist, wobei die Schweißverbindung nach einem Schweißverfahren der zuvor beschriebenen Art hergestellt ist, kann insbesondere in Gestalt eines Gehäusebauteils ausgebildet sein und/oder ein Aktuatorgehäuse kann zumindest ein solches Druckgussformteil aufweisen.

Es sei an dieser Stelle nochmals auf die bereits zuvor genannten neuen Anwendungsmöglichkeiten der vorgeschlagenen Al-Mg-Fe-Legierung verwiesen.

Ein Druckgussformteil der zuvor beschriebenen Art oder ein Aktuatorgehäuse der zuvor beschriebenen Art kann insbesondere in einem Fahrzeug verwendet werden.

Unter einem Fahrzeug ist dabei jede Art von Fahrzeug zu verstehen, welches entweder verbrennungsmotorisch und/oder elektromotorisch betrieben wird, insbesondere aber Personenkraftwagen und/oder Nutzfahrzeuge. Dabei kann es sich um teilautonom und insbesondere auch um vollautonom betriebene Fahrzeuge handeln.

Es wird ferner eine Verwendung eines Druckgussformteils der zuvor beschriebenen Art für ein Steuergerät, insbesondere eines Fahrzeugs vorgeschlagen.

Es wird ferner eine Verwendung eines Druckgussformteils der zuvor beschriebenen Art für ein Aktuatorgehäuse, insbesondere eines Fahrzeugs vorgeschlagen.

Gemäß der Erfindung wird eine Verwendung eines blauen Dioden-Lasers zur fluiddichten Verschweißung eines Druckgussformteils aus einer Al-Mg-Fe-Legierung mit mindestens einem weiteren Metallteil vorgeschlagen (vgl. Anspruch 5).

Dabei werden für die Aluminiumlegierung ein Mg-Gehalt von 4 % ≤ Mg ≤ 4,6 % und ein Fe-Gehalt von 1,31 % ≤ Fe ≤ 1,7 % verwendet sowie ein Zumischungs- bzw. Beimischungsgehalt zusätzlicher, geringfügiger Legierungsbestandteile, welcher maximal 0,2 % Si umfasst, wobei kein Schweißzusatzwerkstoff verwendet wird. Bezüglich des verwendeten blauen Wellenlängenbereiches gilt das vorhergehend Ausgeführte in analoger Weise.

Die dieser Offenbarung zugrunde liegenden Erkenntnisse basieren auf Versuchen mit einer verwendeten Al-Mg-Fe-Legierung namens Castaduct^{®} - 42 [AIMg4Fe2] der RHEINFELDEN ALLOYS GmbH & Co. KG. Bezüglich der Eigenschaften von Castaduct^{®} - 42 [AIMg4Fe2] wird an dieser Stelle auf das Handbuch "Hüttenaluminium-Druckgusslegierungen für Strukturguss im Fahrzeugbau RHEINFELDEN ALLOYS" verwiesen und dabei speziell auf die Seiten 28ff, auf welchen sämtliche Eigenschaften von Castaduct^{®} beschrieben sind.

Zur Veranschaulichung der vorgeschlagenen Al-Mg-Fe-Legierung wird an dieser Stelle auf das in diesem Handbuch - auf Seite 29 - enthaltene Zweistoffdiagramm zu Castaduct-42, AlMg4Fe2 bei 4,5 % Mg verwiesen (siehe Graphik bzw. Bild unten!).

Diese zweidimensionale Graphik stellt dabei einen vertikalen Schnitt durch ein sogenanntes dreidimensionales Dreistoffdiagramm dar - auch ternäres Phasenoder Zustandsdiagramm genannt -, welches die Zusammensetzung der Druckgusslegierung Castaduct-42 bezüglich ihrer wesentlichen Legierungsbestandteile Aluminium (Al; Hauptbestandteil), Magnesium (Mg) und Eisen (Fe) sowie einzelne Phasen dieser Druckgusslegierung graphisch darstellt.

Der besagte Schnitt liegt dabei bei einem Mg-Gehalt von 4,5 %. Der bezüglich des Fe-Gehalts beanspruchte Bereich umfasst dabei das Al-Mg-Fe Eutektikum sowie eine übereutektische Zusammensetzung der zwei Legierungsbestandteile Fe und Mg (siehe obiges Bild, den Bereich für den Fe-Gehalt von 1,31 % ≤ Fe ≤ 1,7 %, d.h. den aufsteigenden Bereich rechts des eutektischen Punktes).

Diese Druckgusslegierung umfasst dabei einen Zumischungs- bzw. Beimischungsgehalt zusätzlicher Legierungsbestandteile, wie im Folgenden dargestellt (siehe dazu auch das besagte Handbuch auf den Seiten 28ff).

**Tabelle 1: Chemische Zusammensetzung von Castaduct-42, AlMg4Fe2 in der Massel (in Masse %)**

| [%] | Si | **Fe** | Cu | Mn | **Mg** | Zn | Ti | **andere** |
|---|---|---|---|---|---|---|---|---|
| min. | | **1,5** | | | **4,0** | | | |
| max. | 0,2 | **1,7** | 0,2 | 0,15 | **4,6** | 0,3 | 0,2 | **Be** |

Diese einzelnen Komponenten bzw. Zusatzelemente Si, Cu, Mn, Zn, Ti und andere (vgl. Tabelle 1) des besagten Zumischungsgehalts können dabei untereinander im Rahmen dieser Offenbarung im Sinne einer und/oder Verknüpfung verstanden werden.

Die besagten Versuche basieren zudem auf einem verwendeten blauen Dioden-Laser der Laserline GmbH (sog. LDMblue Serie) mit einer Leistungsstärke von bis zu 2 kW cw (cw = continuous wave).

### Optische Spezifikationen

| Max. Ausgangsleistung | 500 W | 1.000 W¹ | 1.000 W | 1.500 W¹ |
|---|---|---|---|---|
| Strahlqualität | 60 mm mrad | 60 mm mrad | 100 mm mrad | 100 mm mrad |
| Lichtleitkabel | 600 µm [NA 0,2] | 600 µm [NA 0,2] | 1.000 µm [NA 0,2] | 1.000 µm [NA 0,2] |
| Min. Fokus bei f = 100 mm | 600 µm | 600 µm | 1.000 µm | 1.000 µm |
| Faserstecker | LLK-D/Auto | | | |
| Faserlänge | 5 m, 10m | 5 m | 5 m | 5 m |
| Leistungsstabilität | <+/- 2 % über 2 Stunden | | | |
| Wellenlängenbereich | 400 nm bis 500 nm | | | |

### Mechanische Spezifikationen

| | |
|---|---|
| VG5H² | Gewicht ca. 50 kg, Maße: 19 Zoll Einschub, 5 HE (220 mm), 636 mm tief |
| VG7H | Gewicht ca.110 kg, Maße: 19 Zoll Einschub, 7U (312 mm), 672 mm tief |

### Anschlussdaten

| | | | | |
|---|---|---|---|---|
| Spannungsversorgung | 400 - 480 V, 3 Phasen, PE, 50 oder 60 Hz | | | |
| Anschlussleistung | 4,0 kW | 6,7 kW | 5,4 kW | 9,6 kW |
| Empfohlene Kühlleistung | 3,5 kW | 5,7 kW | 4,4 kW | 8,1 kW |
| Hardwareschnittstellen | Digital 24 V, analoge Leistungsvorgabe 0 - 10 V, Sicherheitsschnittstellen | | | |

### Umgebungsbedingungen

| | |
|---|---|
| Temperatur | 10 - 45 °C im Betrieb, sonst 5-65 °C |
| Feuchtigkeit | maximal 70 % @ 25 °C, nicht kondensierend |
| Schutzart | IP54 |
| Schutzklasse | Laserschutzklasse 1 nach DIN EN 60825-1 |

### Optionen

**Tabelle 2: Spezifikation der LDMblue Laser-Serie (Auszug aus einem Handbuch der Laserline GmbH)**

| | |
|---|---|
| Schnittstellen | Profibus DP, Ethernet, RS232 (VG5H) |
| Optiken | spezielle Laserline Optiken für 450 nm Anwendungen |
| Sonstige | Teleservice, Pilotlaser, CMOS-Kamera, Software für PC |

Im Vergleich zu einem Faserlaser oder Scheibenlaser lässt sich die Schweißenergie eines solchen Dioden-Lasers über die gesamte Breite seines Laserstrahlprofils vorteilhafterweise nahezu rechteckig, d.h. gleichmäßiger in die Schweißstelle einbringen. Eine solche Vermeidung von Energiespitzen begünstigt dabei den Energieeintrag.

Die erzielte Schweißverbindung ist dabei nicht nur fluidisch dicht, sondern genügt auch Anforderungen an eine elektromagnetische Verträglichkeit (EMV).

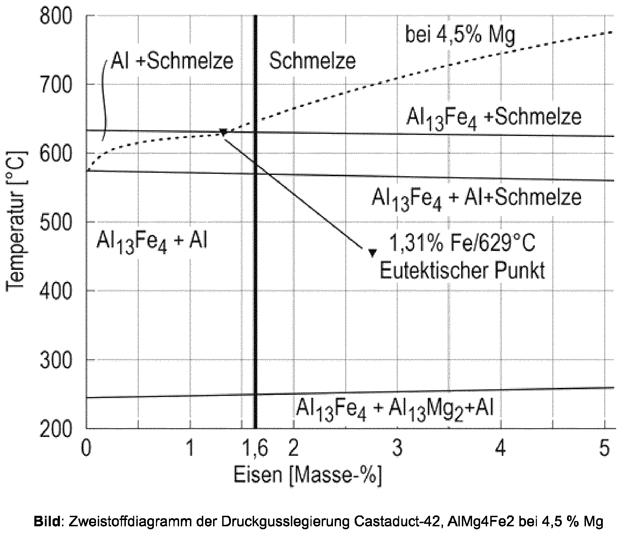

## Patentansprüche

1. Schweißverfahren, bei dem ein Druckgussformteil aus einer Al-Mg-Fe-Legierung mit mindestens einem weiteren Metallteil fluiddicht verschweißt wird,
wobei für die Aluminiumlegierung ein Mg-Gehalt von 4 % ≤ Mg ≤ 4,6 % und ein Fe-Gehalt von 1,31 % ≤ Fe ≤ 1,7 % verwendet werden, wobei der Fe-Gehalt das Al-Mg-Fe-Eutektikum und eine übereutektische Zusammensetzung der zwei Legierungsbestandteile Fe und Mg umfasst, sowie ein Zumischungsgehalt zusätzlicher Legierungsbestandteile, welcher maximal 0,2 % Si umfasst,
wobei für die Verschweißung ein blauer Dioden-Laser und kein Schweißzusatzwerkstoff verwendet wird.

2. Schweißverfahren nach Anspruch 1, wobei ein blauer Wellenlängenbereich von 450 nm ± 30 nm verwendet wird.

3. Schweißverfahren nach Anspruch 2, wobei eine blaue Wellenlänge von 450 nm verwendet wird.

4. Schweißverfahren nach einem der Ansprüche 1 bis 3, wobei als weiteres Metallteil ein Al-Fe-Druckgussformteil der gleichen Art, Reinaluminiumteil, Aluminium-Knetlegierungsformteil und/oder Kupferwerkstoffteil verwendet wird/werden.

5. Verwendung eines blauen Dioden-Lasers zur fluiddichten Verschweißung eines Druckgussformteils aus einer Al-Mg-Fe-Legierung mit mindestens einem weiteren Metallteil,
wobei für die Aluminiumlegierung ein Mg-Gehalt von 4 % ≤ Mg ≤ 4,6 % und ein Fe-Gehalt von 1,31 % ≤ Fe ≤ 1,7 % verwendet werden, wobei der Fe-Gehalt das Al-Mg-Fe-Eutektikum und eine übereutektische Zusammensetzung der zwei Legierungsbestandteile Fe und Mg umfasst, sowie ein Zumischungsgehalt zusätzlicher Legierungsbestandteile, welcher maximal 0,2 % Si umfasst, wobei kein Schweißzusatzwerkstoff verwendet wird.

6. Verwendung nach Anspruch 5, wobei ein blauer Wellenlängenbereich von 450 nm ± 30 nm verwendet wird.

7. Verwendung nach Anspruch 6, wobei eine blaue Wellenlänge von 450 nm verwendet wird.

## Claims

1. A welding method in which a die cast mould part made of an Al-Mg-Fe alloy is welded to at least one further metal part in a fluid-tight manner,
wherein, for the aluminium alloy, a Mg content of 4 % ≤ Mg ≤ 4.6 % and an Fe content of 1.31 % ≤ Fe ≤ 1.7 % are used, wherein the Fe content comprises the Al-Mg-Fe eutectic and a hypereutectic composition of the two alloy constituents Fe and Mg, as well as an admixture content of additional alloy constituents, which comprises a maximum of 0.2 % of Si,
wherein a blue diode laser and no welding filler material is used for welding.

2. The welding method according to claim 1, wherein a blue wavelength range of 450 nm ± 30 nm is used.

3. The welding method according to claim 2, wherein a blue wavelength of 450 nm is used.

4. The welding method according to any one of claims 1 to 3, wherein an Al-Fe die cast mould part of the same type, a pure aluminium part, a wrought aluminium alloy part and/or a copper material part is/are used as the further metal part.

5. Use of a blue diode laser for welding a die cast mould part made of an Al-Mg-Fe alloy to at least one further metal part in a fluid tight manner,
wherein, for the aluminium alloy, a Mg content of 4 % ≤ Mg ≤ 4.6 % and an Fe content of 1.31 % ≤ Fe ≤ 1.7 % are used, wherein the Fe content comprises the Al-Mg-Fe eutectic and a hypereutectic composition of the two alloy constituents Fe and Mg, as well as an admixture content of additional alloy constituents, which comprises a maximum of 0.2 % of Si, wherein no welding filler material is used.

6. The use according to claim 5, wherein a blue wavelength range of 450 nm ± 30 nm is used.

7. The use according to claim 6, wherein a blue wavelength of 450 nm is used.

## Revendications

1. Procédé de soudage, selon lequel une pièce moulée sous pression composée d'un alliage Al-Mg-Fe est soudée de manière étanche au fluide à au moins une autre pièce métallique,
dans lequel pour l'alliage d'aluminium une teneur en Mg de 4 % ≤ Mg ≤ 4,6 % et une teneur en Fe de 1,31 % ≤ Fe ≤ 1,7 % sont utilisées, dans lequel la teneur en Fe comprend l'eutectique Al-Mg-Fe et une composition hypereutectique des deux constituants d'alliage Fe et Mg, ainsi qu'une quantité de mélange de constituants d'alliage supplémentaires, laquelle comprend au maximum 0,2 % de Si, dans lequel pour le soudage un laser à diode bleue est utilisé et aucun métal d'apport n'est utilisé.

2. Procédé de soudage selon la revendication 1, dans lequel une gamme de longueurs d'onde bleue de 450 nm ± 30 nm est utilisée.

3. Procédé de soudage selon la revendication 2, dans lequel une longueur d'onde bleue de 450 nm est utilisée.

4. Procédé de soudage selon l'une quelconque des revendications 1 à 3, dans lequel une pièce moulée sous pression Al-Fe du même type, pièce en aluminium pur, pièce moulée en alliage corroyé d'aluminium et/ou pièce en matériau à base de cuivre est/sont utilisée(s) comme autre pièce métallique.

5. Utilisation d'un laser à diode bleue pour le soudage étanche au fluide d'une pièce moulée sous pression composée d'un alliage Al-Mg-Fe à au moins une autre pièce métallique, dans laquelle pour l'alliage d'aluminium une teneur en Mg de 4 % ≤ Mg ≤ 4,6 % et une teneur en Fe de 1,31 % ≤ Fe ≤ 1,7 % sont utilisées, dans laquelle la teneur en Fe comprend l'eutectique Al-Mg-Fe et une composition hypereutectique des deux constituants d'alliage Fe et Mg, ainsi qu'une quantité de mélange de constituants d'alliage supplémentaires, laquelle comprend au maximum 0,2 % de Si, dans laquelle aucun métal d'apport de soudage n'est utilisé.

6. Utilisation selon la revendication 5, dans laquelle un domaine de longueurs d'onde bleues de 450 nm ± 30 nm est utilisé.

7. Utilisation selon la revendication 6, dans laquelle une longueur d'onde bleue de 450 nm est utilisée.
